# EUROPÄISCHE PATENTSCHRIFT

(11) **EP 0 529 544 B1**
(45) Veröffentlichungstag und Bekanntmachung des Hinweises auf die Patenterteilung: **22.01.1997**
(21) Anmeldenummer: 92114341.8
(22) Anmeldetag: 21.08.1992
(51) Int. Cl.: B60S 9/08, B62D 53/08, B60G 17/052

(54) **Sattelzug mit motorisch angetriebener Abstützvorrichtung**
Tractor-semitrailer combination with power-operated landing gear
Semi-remorque avec dispositif de support actionné par un moteur

(30) Priorität: 22.08.1991 DE 4127791
(43) Veröffentlichungstag der Anmeldung: 03.03.1993
(73) Patentinhaber: ROCKINGER Spezialfabrik für Anhängerkupplungen GmbH & Co., D-80904 München (DE)
(72) Erfinder: Wohlhüter, Gerhard, Dipl.-Ing., W-8000 München 50 (DE)
(74) Vertreter: Weickmann, Heinrich, Dipl.-Ing.

(56) Entgegenhaltungen:
- EP-A- 0 166 882
- EP-A- 0 198 667
- DE-A- 2 006 379
- DE-A- 2 542 328
- FR-A- 1 095 463
- GB-A- 2 223 465
- US-A- 1 990 700
- US-A- 2 959 395
- US-A- 3 288 314
- US-A- 3 764 162

## Beschreibung

Die Erfindung betrifft einen Sattelzug, umfassend ein Zugfahrzeug mit einer Sattelplatte und ferner umfassend einen Sattelauflieger mit einer Aufliegervorrichtung zur Auflage auf der Sattelplatte und mit einer Abstützvorrichtung zur Abstützung des Vorderteils des vom Zugfahrzeug getrennten Sattelaufliegers auf der Fahrfläche.

Die üblicherweise an Sattelaufliegern vorgesehenen Abstützvorrichtungen müssen im Handbetrieb aus- bzw. eingefahren werden. Zum Absatteln des Sattelaufliegers vom Zugfahrzeug wird der Sattelauflieger mittels der Abstützvorrichtungen soweit angehoben, daß das Zugfahrzeug unter dem Sattelauflieger wegfahren kann. Damit dies von Hand geleistet werden kann, ist zwischen einer Kurbel und einer Antriebswelle der Abstützvorrichtung ein beispielsweise zweistufiges Getriebe zwischengeschaltet (siehe bspw. EP-A-0 398 705). In einem Schnellgang mit großem Übersetzungsverhältnis kann ein relativ großer Ausfahrweg der Abstützvorrichtungen mit wenigen Umdrehungen der Kurbel und verhältnismäßig geringer Leistung bewältigt werden. Wenn die Abstützvorrichtung auf der Fahrfläche aufsteht, wird das Getriebe in einen Lastgang mit kleinem Übersetzungsverhältnis umgeschaltet, in welchem der Sattelauflieger mit einer großen Zahl von Umdrehungen um die zum Wegfahren des Zugfahrzeugs erforderliche Höhendifferenz angehoben werden kann. Hierzu ist eine relativ große Leistung erforderlich.

Zum Aufsatteln des Sattelaufliegers auf das Zugfahrzeug werden die vorstehend beschriebenen Schritte in umgekehrter Reihenfolge durchgeführt. Zunächst wird das Zugfahrzeug unter den Sattelauflieger gefahren, dann wird das Vorderteil des Sattelaufliegers im Lastgang abgesenkt, bis die Aufliegervorrichtung auf der Sattelplatte aufliegt, und schließlich wird die Abstützvorrichtung im Schnellgang vollständig eingefahren.

Das An- und Abkoppeln von Hand ist für den Bediener des Sattelzugs, beispielsweise den Fahrer der Zugmaschine, äußerst mühsam, da er zum Anheben bzw. Absenken des Sattelaufliegers das Führerhaus verlassen muß und das Gewicht des Sattelaufliegers samt Ladung mit seiner Muskelkraft anheben bzw. absenken muß.

Es sind bereits Sattelzüge bekannt, bei welchen die Abstützvorrichtung daher mit einem motorischen, beispielsweise hydraulischen oder elektrischen, Antrieb versehen ist (siehe bspw. EP-A-0 198 667, US-A-2 959 395, US-A-3 764 162, GB-A-2 223 465, DE-A-20 06 379 und FR-A-1 095 463). Bei Sattelzügen mit hydraulisch betriebener Abstützvorrichtung muß an der Brennkraftmaschine des Zugfahrzeugs ein separater Nebenantrieb zum Antrieb der Hydraulikzylinder der Abstützvorrichtung vorgesehen sein. Darüber hinaus werden die Abstützvorrichtungen im rauhen Alltagsbetrieb relativ häufig beschädigt, so daß die teuren Hydraulikzylinder ausgetauscht werden müssen. Bei Sattelzügen mit elektrisch betriebenen Abstützvorrichtungen müssen leistungsstarke und somit teure Elektromotoren verwendet werden. Im Hinblick auf die geringe Nennspannung der elektrischen Versorgung des Zugfahrzeugs müssen weiterhin sehr starke Stromzuleitungskabel vom Zugfahrzeug zur Abstützvorrichtung geführt werden.

Aus der DE-A-21 30 959 ist ein Sattelzug mit einer schwenkbaren Abstützvorrichtung bekannt, welche zwischen einer im wesentlichen horizontalen Fahrstellung und einer vertikalen Stellung verschwenkbar ist. Zum Abstützen des Sattelaufliegers auf der Fahrbahn wird zunächst die Abstützvorrichtung in die vertikale Stellung verschwenkt. Dann wird die Sattelplatte mittels einer Hubvorrichtung abgesenkt, bis die von dem Sattelauflieger ausgeübte Last vollständig auf die Abstützvorrichtung übertragen worden ist. Unerwünschtes Wegklappen der schwenkbaren Abstützvorrichtung wird mittels einer Zugfeder verhindert, welche die Abstützvorrichtung in die vertikale Stellung vorspannt.

Aus der US-A-1 990 700 ist ein Sattelzug bekannt, bei welchem die Sattelplatte höhenverstellbar ausgebildet ist, um den Benutzer das Auf- bzw. Absattelns des Sattelaufliegers mittels der handbetätigbaren Abstützvorrichtung zu erleichtern.

Die DE-A-25 42 328 hat einen Sattelzug zum Gegenstand, dessen Sattelplatte derart höhenverstellbar ausgebildet ist, daß ausgehend von einem auf der Fahrbahn abgestützten Sattelauflieger die für die Straßenfahrt erforderliche Hubbewegung der Abstützvorrichtung ohne jegliche Bewegung der Abstützvorrichtung alleine durch die Höhenverstellung der Sattelplatte erhalten wird.

Die Zeitschrift "lastauto-omnibus", Nr. 6, Juni 1972, Seite 25, befaßt sich mit dem Einsatz einer Luftfederung beim Auf- oder Absatteln von Sattelaufliegern. Hierbei wird offensichtlich von einer handbetätigten Abstützvorrichtung ausgegangen, denn es ist nicht ersichtlich, welchen "Schrecken" das Auf- oder Absatteln bei Verwendung einer motorisierten Abstützvorrichtung haben könnte.

Aus der EP-A-0 166 882 ist eine höhenverstellbare Luftfederung bekannt, welche zwischen dem Fahrzeugrahmen und Starrachsen des Fahrzeugs angeordnet ist. Im Falle eines Sattelzugs wird die bekannte Luftfederung dazu genutzt, die durch die Höhe der Sattelplatte bestimmte Neigung des Sattelaufliegers in Fahrzeuglängsrichtung auszugleichen, so daß die Last des Sattelaufliegers über die Reifen sämtlicher drei Achsen des Sattelaufliegers annähernd gleichmäßig auf die Fahrbahn übertragen wird.

Der aus der US-A-3 288 314 bekannte Sattelzug umfaßt eine herkömmliches Zugfahrzeug und einen Sattelauflieger, der von einem zur Straßenfahrt auf einer Hinterachsbaugruppe montierbaren Container gebildet ist. Mittels handbetätigbarer Abstützvorrichtungen kann der Container derart auf dem Untergrund abgestellt werden, daß von diesem Container sowohl das Zugfahrzeug als auch die Hinterachsbaugruppe zum Transport eines weiteren Containers entfernt werden können.

Aus der DE-U-88 07 121 ist ein Pkw-Anhänger mit auswechselbarem Aufbau bekannt. Gemäß dieser Druckschrift wird der gerade nicht benötigte Aufbau mittels ausklappbarer Stützen auf der Fahrfläche abgestellt. Das Absetzen und Aufnehmen eines derartigen Wechselaufbaus wird durch eine an Rahmen des Pkw-Anhängers angeordnete, heb- und senkbare Führungsschiene erleichtert.

Die DE-A-36 24 879 betrifft ebenfalls Wechselaufbauten von Kraftfahrzeugen, insbesondere einen von Hand ausklappbaren Stützfuß für Wechselaufbauten von Lastkraftwagen.

Die bekannten Abstützvorrichtungen haben alle den Nachteil, teuer und aufwendig zu sein, da sie zum Anheben und Absenken des Sattelaufliegers mit entsprechend leistungsstarken motorischen Antrieben versehen sind.

Demgegenüber liegt die Aufgabe der Erfindung darin, einen Sattelzug mit motorisch angetriebener Abstützvorrichtung bereitzustellen, bei welchem ein leistungsärmerer und somit kostengünstigerer motorischer Antrieb verwendet werden kann.

Diese Aufgabe wird durch einen Sattelzug gelöst mit den Merkmalen des Anspruch 1.

Bei dem erfindungsgemäßen Sattelzug werden die zur Vorbereitung des Absattelns des Sattelaufliegers vom Zugfahrzeug notwendigen Arbeitsschritte nicht mehr ausschließlich mittels der Abstützvorrichtung durchgeführt. Durch den leistungsmäßig auf das Verstellen der Abstützvorrichtung im unbelasteten Zustand beschränkten motorischen Antrieb wird die Abstützvorrichtung beim Absatteln des Sattelaufliegers solange ausgefahren, bis die Abstützvorrichtung auf der Fahrfläche aufsteht. Dann wird die Sattelplatte gegenüber der Achshöhe der Hinterachsbaugruppe des Zugfahrzeugrahmens abgesenkt, bis die zum Wegfahren des Zugfahrzeugs erforderliche Höhendifferenz zwischen der Sattelplatte des Zugfahrzeugs und der Aufliegervorrichtung des Sattelaufliegers erreicht ist. Durch diese Maßnahmen ist es nicht länger notwendig, daß der motorische Antrieb den Sattelauflieger samt Ladung im Bereich des Vorderteils anheben kann. Entsprechend kann ein leistungsarmer und somit preisgünstig erhältlicher motorischer Antrieb verwendet werden.

Da die überwiegende Mehrzahl dar Zugfahrzeuge luftgefedert ist, wird in Weiterbildung vorgeschlagen, daß zur Höhenverstellung der Sattelplatte gegenüber der Achshöhe der Hinterachsbaugruppe des Zugfahrzeugrahmens eine Luftfederung dient, welche zwischen der Hinterachsbaugruppe und dem Zugfahrzeugrahmen eingeschaltet ist. Es ist somit nicht erforderlich, zur Höhenverstellung der Sattelplatte gegenüber der Achshöhe der Hinterachsbaugruppe des Zugfahrzeugs eine zusätzliche Komplett-Vorrichtung vorzusehen.

Im Hinblick auf möglichst niedrige Investitionskosten wird vorgeschlagen, daß die Abstützvorrichtung von einer handbetätigbaren Abstützvorrichtung, insbesondere einer handelsüblichen Abstützvorrichtung, abgeleitet ist. Diese kann mit dem motorischen Antrieb ständig gekuppelt oder kuppelbar sein. Ist ein Sattelauflieger bereits mit einer solchen handelsüblichen Abstützvorrichtung ausgebildet, so kann der motorische Antrieb als Bausatz nachgeliefert werden, der auf die bereits vorhandene handelsübliche Abstützvorrichtung angepaßt ist. Weiterhin wird hierdurch ermöglicht, daß bei einer Beschädigung der Abstützvorrichtung beim Betrieb des Sattelzugs lediglich die relativ preisgünstig erhältlichen handbetätigten Abstützvorrichtungen ausgetauscht werden müssen.

Die Verbindung des Antriebs mit der Abstützvorrichtung kann beispielsweise derart vorgenommen werden, daß der motorische Antrieb mit der Abstützvorrichtung durch ein Zusatzgetriebe, insbesondere Planetengetriebe, gekuppelt oder kuppelbar ist. Hierbei ermöglicht das Zusatzgetriebe eine Reduzierung der Drehmomentabgabe des motorischen Antriebs.

Bei Ausrüstung der Abstützvorrichtung mit einem Kurbeltrieb kann der motorische Antrieb an eine Welle des Kurbeltriebs angekuppelt oder ankuppelbar sein.

Ist bei einer solchen Ausführungsform der Kurbeltrieb mit einem Schaltgetriebe ausgeführt, welches ein kleines Übersetzungsverhältnis für die Verstellung der Abstützvorrichtung unter Last und ein großes Übersetzungsverhältnis für die Verstellung der Abstützvorrichtung ohne Last anbietet, so kann der motorische Antrieb derart mit dem Schaltgetriebe verbunden sein, daß er unter Ausnutzung des kleinen Übersetzungsverhältnisses die Verstellung der Abstützvorrichtung bewirkt.

Hierbei ist es möglich, daß der motorische Antrieb die Kurbel ersetzt. Bevorzugt ist es jedoch, daß der motorische Antrieb unter Beibehaltung der Kurbel mit einem Zusatzeingang des Kurbeltriebs verbunden ist. Durch die Beibehaltung der Kurbel kann die Ausfallsicherheit der Abstützvorrichtung erhöht werden, da bei einem Ausfall des motorischen Antriebs die Abstützvorrichtung immer noch von Hand betätigt werden kann. Bei Antrieb der Abstützvorrichtung mittels des motorischen Antriebs ist es bevorzugt, die Kurbel am Fahrzeug getrennt von der Abstützvorrichtung aufzubewahren und die Kurbel lediglich im Falle der Handbetätigung auf die für sie vorgesehene Eingangswelle der Abstützvorrichtung aufzustecken.

Um dem Sattelauflieger des Sattelzugs auch im vom Zugfahrzeug getrennten Zustand eine hohe Stabilität gegen, in Längsrichtung des Sattelaufliegers gesehen, seitliche Verkippungen verleihen zu können, wird vorgeschlagen, daß die Abstützvorrichtung zwei quer zur Fahrtrichtung nebeneinanderliegende Stützelemente aufweist, welche gemeinsam antreibbar sind.

Hierbei ist es bevorzugt, daß der motorische Antrieb innerhalb eines Tragrahmens des Sattelaufliegers zwischen den beiden Stützelementen angeordnet ist. Hierdurch kann der motorische Antrieb in einer geschützten Position angeordnet werden, in welcher eine Beschädigung des Antriebs im oftmals rauhen Betrieb weitestgehend vermieden werden kann. Gleichzeitig wird Bauraum gespart und die Antriebsübertragung vereinfacht.

Um einen hohen Grad an Sicherheit gegen unbeabsichtigtes selbsttätiges Einfahren der Abstützvorrichtung gewährleisten zu können, wird vorgeschlagen, daß die Abstützvorrichtung mindestens ein mit einem Spindeltrieb ausgeführtes Stützelement umfaßt, wobei der Spindeltrieb selbstsperrend sein kann. Dabei kann der motorische Antrieb einen Elektromotor umfassen. Bevorzugt ist es jedoch, daß der motorische Antrieb einen Druckluftmotor umfaßt, welcher von einem aufliegerseitigen Druckluftbehälter her antreibbar ist.

Die Erfindung betrifft weiter einen Sattelauflieger mit einer motorisch angetriebenen Abstützvorrichtung sowie eine motorisch angetriebene Abstützvorrichtung für einen Sattelzug.

Die Erfindung wird im folgenden an Hand der beiliegenden Zeichnung an Ausführungsbeispielen näher erläutert werden. Es stellen dar:
- Figur 1: Eine schematische Darstellung eines Sattelzugs in fahrbereitem Zustand;
- Figur 2: eine Darstellung analog Fig. 1, jedoch mit der Abstützvorrichtung in verlängertem Zustand;
- Figur 3: eine Darstellung analog Fig. 2, jedoch mit relativ zur Achshöhe der Hinterachsbaugruppe des Zugfahrzeugs abgesenkter Sattelplatte;
- Figur 4: eine Darstellung analog Fig. 3, jedoch mit vom Sattelauflieger entferntem Zugfahrzeug;
- Figur 5: eine geschnittene Ansicht der Abstützvorrichtung in Längsrichtung des Sattelaufliegers gesehen;
- Figur 6: eine schematische Darstellung einer ersten und bevorzugten Ausführungsform der Abstützvorrichtung;
- Figuren 7 bis 9: Darstellungen analog Fig. 6 weiterer Ausführungsformen der Abstützstützvorrichtung; und
- Figuren 10 bis 12: Darstellungen weiterer Fahrzeuge, bei denen die Abstützvorrichtung eingesetzt werden kann.

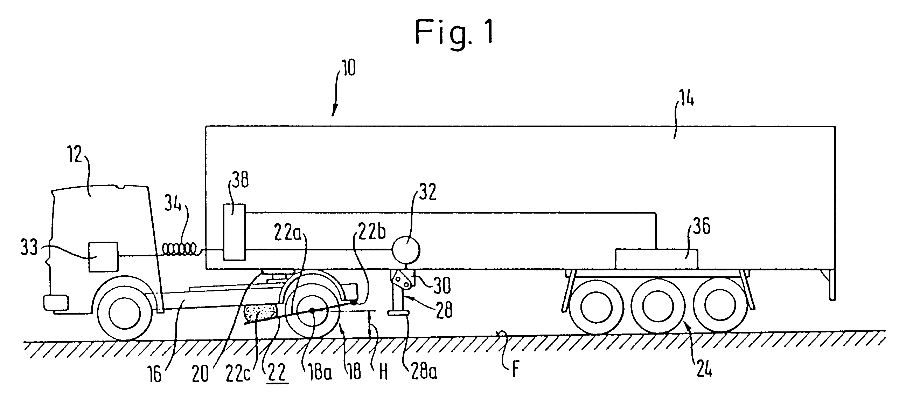

Der in den Fig. 1 - 4 dargestellte und mit 10 bezeichnete Sattelzug umfaßt ein Zugfahrzeug 12 und einen Sattelauflieger 14. Das Zugfahrzeug 12 weist einen Zugfahrzeugrahmen 16, eine Hinterauchsbaugruppe 18 und eine Sattelplatte 20 auf. Die Sattelplatte 20 ist auf dem Zugfahrzeugrahmen 16 im Bereich der Hinterachsbaugruppe 18 angeordnet und über eine in den Fig. 1 - 4 schematisch dargestellte Luftfederung 22 gegenüber der Achshöhe H der Hinterachsbaugruppe 18 höhenverstellbar. Die Achse 18a der Hinterachsbaugruppe 18 ist an einem Hebel 22a der Luftfederung 22 drehbar gelagert, der am Zugfahrzeugrahmen 16 bei 22b schwenkbar befestigt ist. Für die Höhenverstellung der Sattelplatte 20 gegenüber der Achshöhe H der Hinterachse 18a sorgt ein zwischen dem Hebel 22a und dem Fahrzeugrahmen 16 angeordneter Luftbalg 22c.

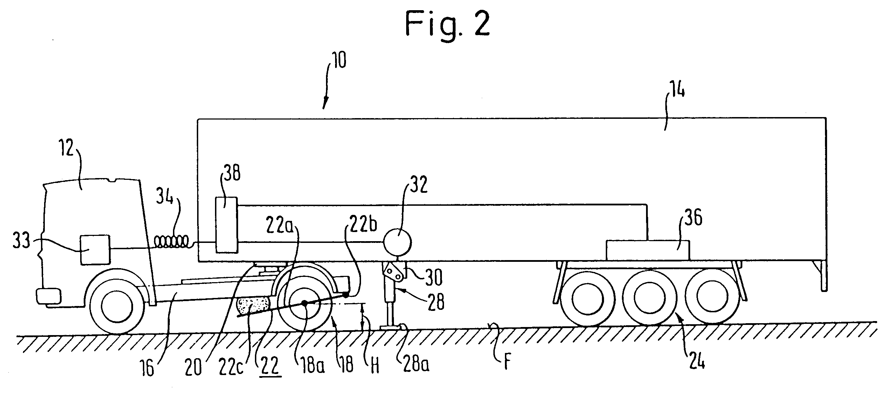

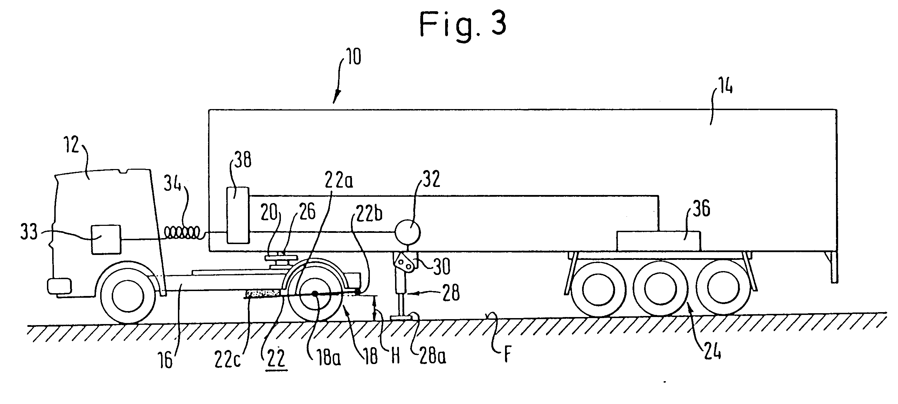

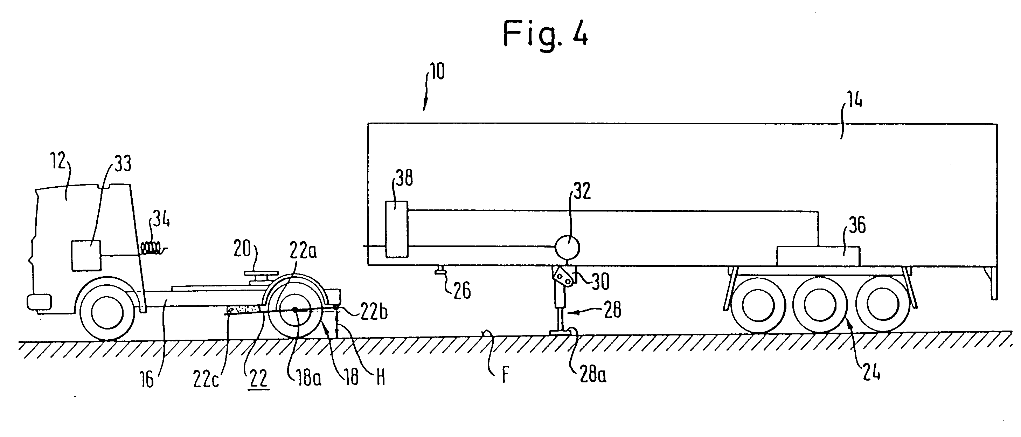

Der Sattelauflieger 14 weist eine Hinterachsbaugruppe 24 im Bereich des hinteren Teils des Sattelaufliegers 14, eine Aufliegervorrichtung 26 (s. Fig. 3 und 4) im Bereich des vorderen Teils des Sattelaufliegers 14 und eine zwischen der Hinterachsbaugruppe 24 und der Aufliegervorrichtung 26 angeordnete Abstützvorrichtung 28 auf. Die Abstützvorrichtung 28 dient zur Abstützung des Vorderteils des vom Zugfahrzeug 12 getrennten Sattelaufliegers 14 im vom Zugfahrzeug 12 getrennten Zustand (Fig. 4). Hierzu kann die Abstützvorrichtung 28 zwischen einer verkürzten Fahrstellung, in welcher Stützen 28a der Abstützvorrichtung 28 angehoben sind (vgl. Fig. 1), und einer verlängerten Stützstellung, in welcher die Stützen abgesenkt sind (vgl. Fig. 2,3 und 4), verstellt werden.

Die Abstützvorrichtung 28 ist mit einem in den Fig. 1 - 4 schematisch bei 30 angedeuteten, motorischen Antrieb versehen. Dieser motorische Antrieb 30 kann beispielsweise von einem Druckluftmotor gebildet sein und ist leistungsmäßig lediglich zum Verstellen der Abstützvorrichtung 28 im vom Sattelauflieger 14 unbelasteten Zustand ausgelegt. Der Druckluftmotor 30 ist jedoch nicht so leistungsstark ausgebildet, daß er in der Lage wäre, das Vorderteil des Sattelaufliegers 14 samt dessen Ladung anzuheben. Der Druckluftmotor 30 wird von einem am Sattelauflieger 14 vorgesehenen Druckluftspeicher 32 gespeist, der von einem im Zugfahrzeug 12 vorgesehenen Kompressor 33 über eine Druckluftversorgungsleitung 34 für das Bremssystem 36 des Sattelaufliegers 14 und einen Verteiler 38 befüllt wird. Diese Ausbildung hat den Vorteil, daß keine zusätzliche Versorgungsleitung vom Zugfahrzeug 12 zum Sattelauflieger 14 geführt werden muß. Der Verteiler 38 gewährleistet, daß ein Druckluftbehälter des Bremssystems 36 des Sattelaufliegers 14 mit Vorrang befüllt wird, so daß stets die Bremsfähigkeit des Sattelaufliegers 14 sichergestellt ist. Es ist jedoch prinzipiell auch denkbar, den Druckluftmotor 30 direkt von einer vom Zugfahrzeug 12 kommenden Druckluftversorgungsleitung aus mit Druckluft zu versorgen.

Im folgenden werden die zum Absatteln des Sattelaufliegers 14 vom Zugfahrzeug 12 erforderlichen Schritte an Hand der Fig. 1 - 4 näher erläutert.

Fig. 1 zeigt den erfindungsgemäßen Sattelzug im aufgesattelten und fahrbereiten Zustand. Zum Absatteln werden zunächst die Stützen 28a der Abstützvorrichtung 28 mittels des motorischen Antriebs 30 ausgefahren, bis sie gemäß Fig. 2 auf der Fahrfläche F aufstehen. Die Abstützvorrichtung 28 befindet sich nunmehr in ihrer Stützstellung. Als nächstes wird gemäß Fig. 3 der Rahmen 16 und die Sattelplatte 20 durch Ablassen von Luft aus dem Luftbalg 22c der Luftfederung 22 gegenüber der Achshöhe H der Hinterachsbaugruppe 18 abgesenkt. Hierdurch wird die zum Wegfahren des Zugfahrzeugs 12 vom Sattelauflieger 14 erforderliche Höhendifferenz zwischen der Aufliegervorrichtung 26 und der Sattelplatte 20 bereitgestellt. Nach Lösen der Versorgungsleitung 34 zwischen Zugfahrzeug 12 und Sattelauflieger 14 und Lösen der Sattelkupplung kann das Zugfahrzeug gemäß Fig. 4 von dem Sattelauflieger weggefahren werden.

Das motorische Ausfahren der Abstützvorrichtung 28 kann über eine Fernbetätigung, beispielsweise vom Führerhaus der Zugmaschine 12 aus, vorgenommen werden. Bei Kombination der motorisch angetriebenen Abstützvorrichtung 28 mit einer ebenfalls motorisch angetriebenen und ggf. vom Führerhaus der Zugmaschine aus fernbetätigbaren Sattelkupplung ergibt sich für einen Bedienungsmann der Vorteil, daß sämtliche beim Absatteln des Sattelaufliegers 14 große Kraft erfordernden Schritte nicht mehr von Hand vorgenommen werden müssen, sondern mit Hilfe von motorischen Antrieben durchgeführt werden können. Sind sowohl Abstützvorrichtung als auch Sattelkupplung vom Führerhaus fernbetätigbar und ist schließlich der Sattelzug auch mit einer fernbetätigbaren Kupplungseinrichtung für die zwischen Zugfahrzeug und Sattelauflieger verlaufenden Versorgungsleitungen ausgerüstet, so kann das Ab- und Aufsatteln des Sattelaufliegers von dem bzw. auf das Zugfahrzeug von einem Bedienungsmann, beispielsweise dem Fahrer des Sattelzugs, durchgeführt werden, ohne daß er hierzu das Führerhaus verlassen muß.

Zum Aufsatteln des Sattelaufliegers 14 auf das Zugfahrzeug 12 werden die in den Fig. 1 - 4 dargestellten Schritte in umgekehrter Reihenfolge durchgeführt: Das Zugfahrzeug 12 fährt mit gegenüber der Achshöhe H der Hinterachsbaugruppe 18 abgesenkter Sattelplatte 20 unter den Sattelauflieger 14 (s. Fig. 3). Hierauf werden die Sattelplatte 20 relativ zur Achshöhe H durch Befüllen des Luftbalgs 22c der Luftfederung 22 angehoben und die Versorgungsleitung 34 angeschlossen (s. Fig. 2). Schließlich werden die Stützen 28a der Abstützvorrichtung 28 mittels des motorischen Antriebs 30 in die Fahrstellung zurückgezogen (s. Fig. 1).

Es ist bei der Ausbildung einer mit einem motorischen Antrieb versehenen Abstützvorrichtung erfindungsgemäß bevorzugt, von einer handelsüblichen, handbetätigten Abstützvorrichtung auszugehen, und an dieser einen motorischen Antrieb anzubringen. Dies hat mehrere Vorteile: Zum einen wird hierdurch sichergestellt, daß die Abstützvorrichtung bei Ausfall des motorischen Antriebs dennoch von Hand über eine Handkurbel betätigt werden kann und zum anderen können mit einer derartigen motorisch betätigbaren Abstützvorrichtung versehene Sattelauflieger hierdurch auch in Verbindung mit Zugfahrzeugen eingesetzt werden, die nicht über eine höhenverstellbare Sattelplatte verfügen. Auch in letzterem Fall kann die Abstützvorrichtung konventionell mittels einer Handkurbel von Hand betätigt werden.

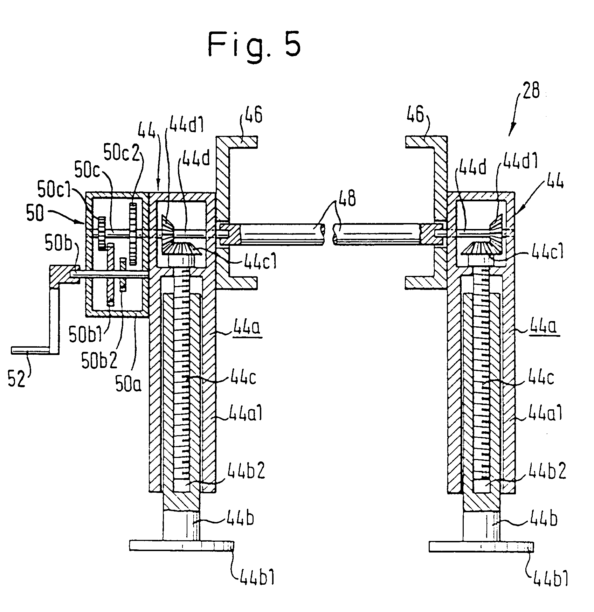

In Fig. 5 ist eine derartige handelsübliche und handbetätigte Abstützvorrichtung 28 in einem senkrecht zur Längsrichtung des Sattelaufliegers 14 verlaufenden Schnitt dargestellt. Die Abstützvorrichtung 28 umfaßt zwei Stützelemente 44, die jeweils mit einem Gehäuseteil 44a an einem U-förmigen Träger 46 des Rahmens des Sattelaufliegers 14 befestigt sind. In einem nach unten offenen, rohrförmigen Teil 44a1 des Gehäuses 44a jedes Stützelements 44 ist eine Stütze 44b geführt, an deren unterem Ende ein Tellerfuß 44b1 angeordnet ist. Von dem vom Tellerfuß 44b1 abgewandten Ende jeder Stütze 44b erstreckt sich ein mit einem Innengewinde versehenes Sackloch 44b2 in Längsrichtung der Stütze 44b. In dieses Sackloch 44b2 greift eine mit Außengewinde versehene Spindel 44c ein, die an ihrem oberen Ende mit einem Kegelzahnrad 44c1 versehen ist.

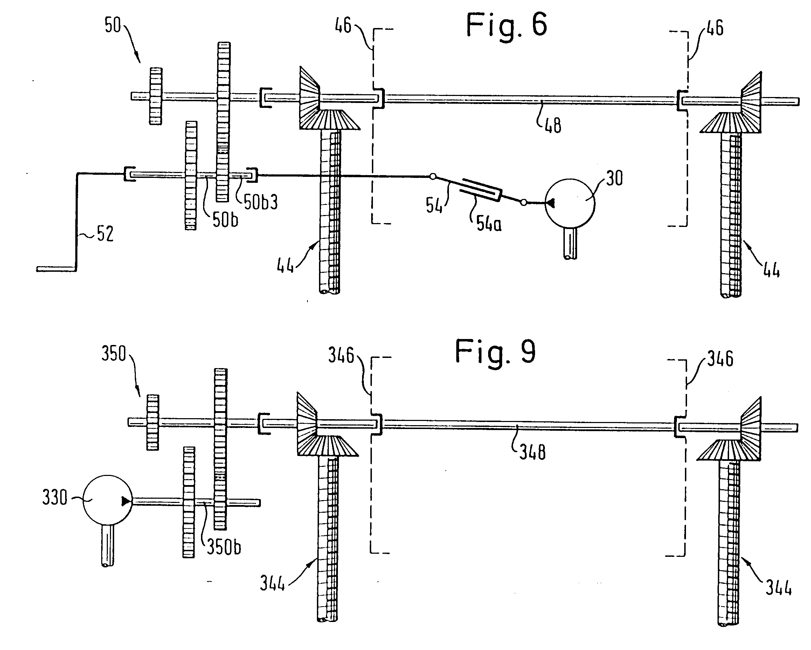

Üblicherweise weist eine der beiden Spindeln 44c ein Linksgewinde und die jeweils andere Spindel ein Rechtsgewinde auf. In den Figuren 6 bis 9 weist jeweils die linke Spindel ein Rechtsgewinde und die rechte Spindel ein Linksgewinde auf. Die Innengewinde der den Spindeln zugeordneten Sacklöcher sind diesen entsprechend ausgebildet.

Mit dem Kegelzahnrad 44c1 (siehe Fig. 5) wirkt ein an einer Eingangswelle 44d des Stützelements 44 angebrachtes Kegelzahnrad 44d1 zusammen. Die Eingangswellen 44d durchsetzen das Gehäuse 44a der Stützelemente 44 und sind über eine die Träger 46 durchsetzende Synchronisierungswelle 48 miteinander verbunden.

Dem in Fig. 5 linken Stützelement 44 ist ein zweistufiges Getriebe 50 vorgeschaltet. In einem Gehäuse 50a des Getriebes sind eine Eingangswelle 50b und eine Ausgangswelle 50c geführt. Die Ausgangswelle 50c ist mit der Eingangswelle 44d des in Fig. 5 linken Stützelements 44 verbunden. An der Eingangswelle 50b des Getriebes 50 ist ein Zahnrad 50b1 angeordnet, welches in einem Schnellgang des Getriebes 50 mit einem Zahnrad 50c1 an der Ausgangswelle 50c ein großes Übersetzungsverhältnis für die Verstellung der Abstützvorrichtung ohne Last bereitstellt. Weiterhin ist an der Eingangswelle 50b ein zweites Zahnrad 50b2 vorgesehen, welches in einem Lastgang des Getriebes 50 mit einem Zahnrad 50c2 an der Ausgangswelle des Getriebes 50 zusammenwirkt, um ein kleines Übersetzungsverhältnis für die Verstellung der Abstützvorrichtung unter Last bereitzustellen.

Die in Fig. 5 dargestellte handbetätigte Abstützvorrichtung 28 kann mittels einer an der Eingangswelle 50b des Getriebes 50 angebrachten Handkurbel 52 betätigt werden.

Dadurch, daß erfindungsgemäß von einer handelsüblichen, handbetätigten Abstützvorrichtung ausgegangen wird, ist es möglich, den motorischen Antrieb nachzurüsten. Hierzu muß lediglich der motorische Antrieb am Sattelauflieger befestigt, beispielsweise festgeschraubt, werden und die Ausgangswelle des motorischen Antriebs mit der Eingangswelle 50b des Getriebes 50 verbunden werden.

Im folgenden werden an Hand der Fig. 6 - 9 verschiedene Ausführungsformen der Ankopplung eines motorischen Antriebs an die vorstehend beschriebene, handelsübliche Abstützvorrichtung beschrieben.

In einer ersten und bevorzugten Ausführungsform ist der Druckluftmotor 30 gemäß Fig. 6 zwischen den beiden Stützelementen innerhalb des Rahmens 46 des Sattelaufliegers 14 angeordnet und über eine Verbindungswelle 54 mit einem zweiten Ende 50b3 der Eingangswelle 50b des Getriebes 50 verbunden. Zum Antrieb der Abstützvorrichtung 28 durch den Druckluftmotor 30 wird das Getriebe 50, wie in Fig. 6 dargestellt, im Lastgang betrieben, um einen Druckluftmotor 30 mit geringem Ausgangsdrehmoment verwenden zu können.

Die Anbringung des Druckluftmotors innerhalb des Rahmens 46 des Sattelaufliegers 14 hat den Vorteil, daß der Druckluftmotor 30 an einer geschützten Stelle angeordnet ist und somit nicht der Gefahr einer Beschädigung beim Betrieb des Sattelzugs ausgesetzt ist. Gleichzeitig wird Bauraum gespart und die Antriebsübertragung vereinfacht. In diesem Ausführungsbeispiel ist die Verbindungswelle 54 als Gelenkwelle, beispielsweise Kardanwelle, ausgebildet. Hierdurch ist man relativ frei in der Wahl des Anbringungsortes des Druckluftmotors 30 am Rahmen 46 des Sattelaufliegers 14. Um sicherzustellen, daß die Abstützvorrichtung 28 auch bei einem etwaigen Ausfall des Druckluftmotors 30 noch betrieben werden kann, ist an der Eingangswelle 50b des Getriebes 50 weiterhin eine Handkurbel 52 vorgesehen. Wie in Fig. 6 bei 54a angedeutet ist, ist die Verbindungswelle 54 teleskopierbar ausgeführt, um im Handbetrieb das Getriebe 50 zwischen Schnellgang und Lastgang verstellen zu können.

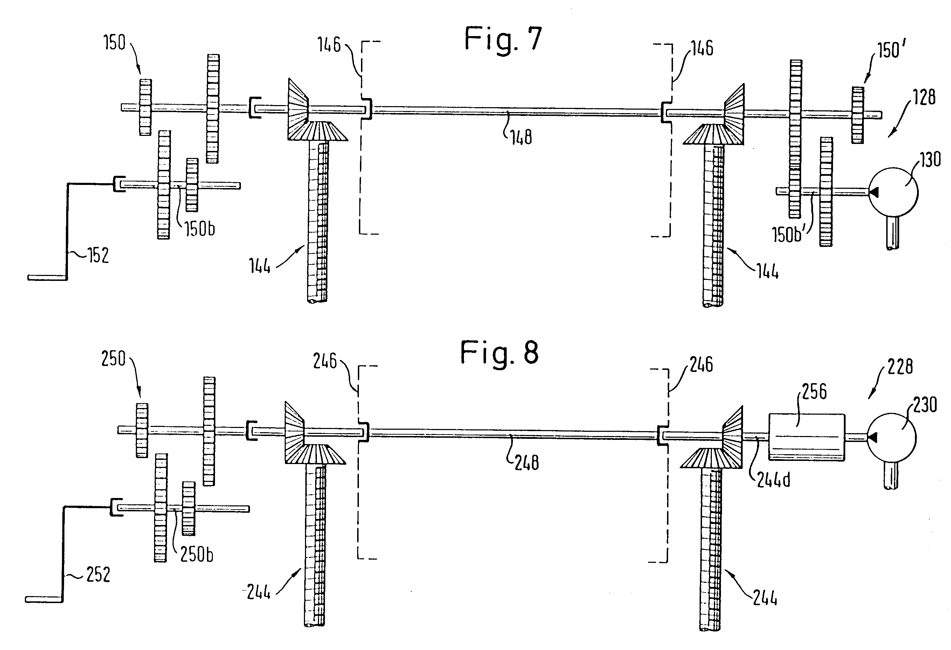

In Fig. 7 ist eine zweite Ausführungsform einer mit einem motorischen Antrieb versehenen, handelsüblichen Abstützvorrichtung dargestellt, wobei analoge Teile mit gleichen Bezugszeichen versehen sind wie in Fig. 6, jedoch vermehrt um die Zahl 100.

In dieser Ausführungsform sind beide Stützelemente 144 mit einem Getriebe 150 bzw. 150' versehen. Der Druckluftmotor 130 ist an der Eingangswelle 150b' des in Fig. 7 rechten Getriebes 150' angebracht. Das Getriebe 150' wird bei dieser Ausführungsform stets in der in Fig. 7 dargestellten Stellung, d.h. im Lastgang, betrieben. Um auch bei dieser Ausführungsform die Abstützvorrichtung 128 bei einem eventuellen Ausfall des Druckluftmotors 130 von Hand betreiben zu können, ist an der Eingangswelle 150b des in Fig. 7 linken Getriebes 150 eine Handkurbel 152 angebracht.

In Fig. 8 ist eine weitere Ausführungsform einer mit einem motorischen Antrieb versehenen, handelsüblichen Abstützvorrichtung dargestellt, wobei analoge Teile mit gleichen Bezugszeichen versehen sind wie in Fig. 6, jedoch vermehrt um die Zahl 200.

Die Ausführungsform gemäß Fig. 8 unterscheidet sich von der Ausführungsform gemäß Fig. 7 lediglich dadurch, daß zwischen dem Druckluftmotor 230 und der Eingangswelle 244d des in Fig. 8 rechten Stützelements 244 anstelle des Getriebes 150' ein Zusatzgetriebe, beispielsweise ein Planetengetriebe 256, vorgesehen ist. Ansonsten gilt das für die Ausführungsform gemäß Fig. 7 Gesagte.

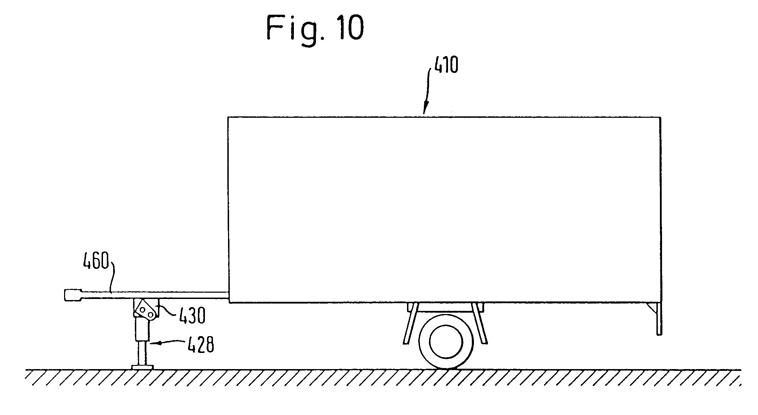

In Fig. 9 ist eine weitere Ausführungsform einer mit einem motorischen Antrieb versehenen, handelsüblichen Abstützvorrichtung dargestellt, wobei analoge Teile mit gleichen Bezugszeichen versehen sind wie in Fig. 6, jedoch vermehrt um die Zahl 300.

Die Ausführungsform gemäß Fig. 9 unterscheidet sich von der Ausführungsform gemäß Fig. 6 dadurch, daß der Druckluftmotor 330 nicht innerhalb des Rahmens 346 des Sattelaufliegers, sondern außerhalb des Rahmens 346 an dem in Fig. 9 linken Ende der Eingangswelle 350b des Getriebes 350 angeordnet ist. Weiterhin ist bei dieser Ausführungsform keine Handkurbel für einen eventuellen Handbetrieb vorgesehen.

Neben der vorstehend beschriebenen Verwendung bei einem Sattelzug kann die mit einem motorischen Antrieb versehene Abstützvorrichtung auch verschiedenen anderen Fahrzeugen mit Vorteil eingesetzt werden. Im folgenden werden anhand der Fig. 10 bis 12 drei derartige Einsatzmöglichkeiten näher beschrieben werden.

In Fig. 10 ist ein mit 410 bezeichneter Einachs-Anhänger mit einer Deichsel 460 in einem von einem nicht gezeigten Zugfahrzeug abgekuppelten Zustand dargestellt. Um in diesem Zustand verhindern zu können, daß die Ladung des Anhängers verrutscht und um ein einfacheres Wiederankuppeln an ein Zugfahrzeug zu ermöglichen, ist es bei derartigen Einachsanhängern erwünscht, die Deichsel 460 im abgekuppelten Zustand abzustützen. Hierzu ist an der Deichsel 460 eine einzelne mit einem motorischen Antrieb 430 versehene Abstützvorrichtung 428 angeordnet. Mit dem vorstehend verwendeten Begriff "Einachsanhänger" sind Anhänger mit einer Achse im Sinne der Straßenverkehrszulassungsordnung (StVZO) bezeichnet, d.h. beispielsweise auch Anhänger mit Zwillingsachse.

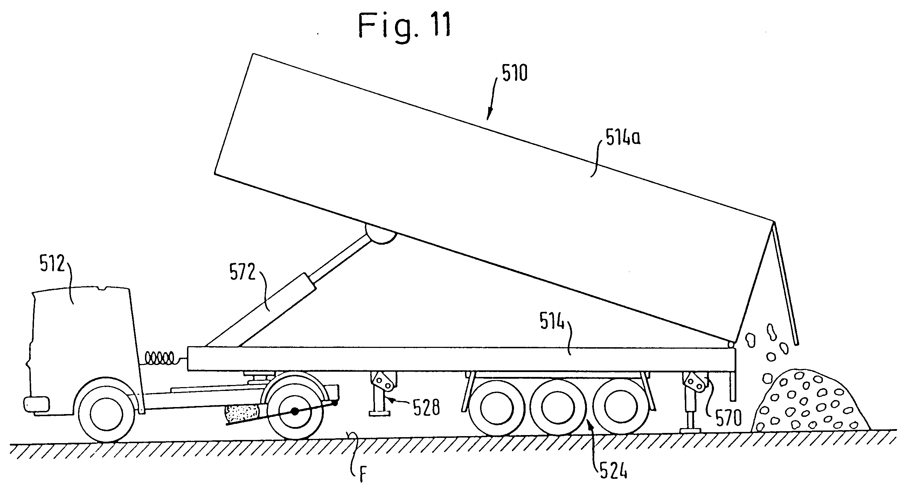

Ein weiteres Anwendungsbeispiel ist der Einsatz der Abstützvorrichtung bei einem Kipperfahrzeug. In Fig. 11 ist ein Sattelzug 510 mit einem Kipperauflieger 514 dargestellt. Bei Kipperfahrzeugen ergibt sich allgemein das Problem, daß beim Entladen des Kippers (hier Kipperauflieger 514) die Last zunehmend auf die Hinterachsbaugruppe 524 verlagert wird. Um diese beim Entladen zu entlasten, ist in Fahrtrichtung gesehen hinter der Hinterachsbaugruppe 524 eine Abstützvorrichtung 570 vorgesehen, die vor dem Entladen ausgefahren werden kann. Wird nun zum Entladen des Kipperaufliegers 514 der Kipper 514a mittels einer Hydraulikvorrichtung 572 gemäß Fig. 11 angehoben, so nimmt die ausgefahrene Abstützvorrichtung 570 einen Großteil der Belastung auf, stützt den Kipperauflieger 514 auf der Fahrfläche F ab und entlastet somit die Hinterachsbaugruppe 524.

Die Abstützvorrichtung 570 kann zusätzlich zur Abstützvorrichtung 528 vorgesehen sein, welche den Kipperauflieger 514 im vom Zugfahrzeug 512 abgekoppelten Zustand auf der Fahrfläche F abstützt. Darüber hinaus ist der Einsatz der Abstützvorrichtung 570 nicht auf Sattelzüge mit Kipperauflieger beschränkt, sondern kann ebenso bei andersartigen Kipperfahrzeugen eingesetzt werden.

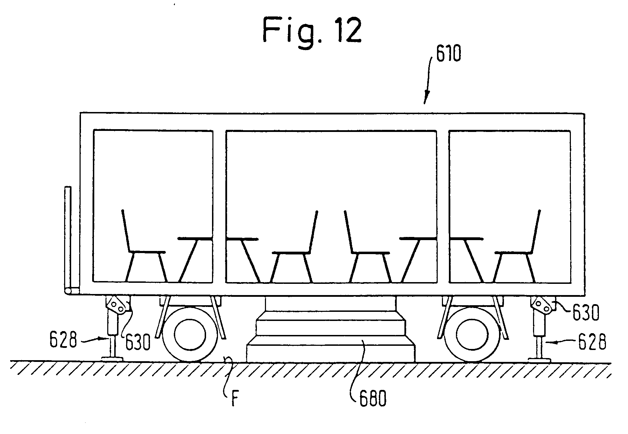

In Fig. 12 ist der Einsatz von mit einem motorischen Antrieb versehenen Abstützvorrichtungen bei einem Ausstellungsfahrzeug 610 dargestellt. Derartige Ausstellungsfahrzeuge werden in zunehmendem Maße eingesetzt, da sie beispielsweise bei Wanderausstellungen den Auf- und Abbau eines Ausstellungsstands ersparen. Bei Verwendung des Ausstellungsfahrzeugs 610 wird das Ausstellungsfahrzeug von einem in Fig. 12 nicht dargestellten Zugfahrzeug an einen gewünschten Ort gefahren. Zur Stabilisierung des Ausstellungsfahrzeugs 610 werden Abstützvorrichtungen 628 auf die Fahrfläche F abgesenkt. In diesem Zustand hat das Ausstellungsfahrzeug festen Stand. Besucher des Ausstellungsstands können diesen beispielsweise über eine ausfahrbare Treppe 680 betreten. Der motorische Antrieb 630 der Abstützvorrichtungen 628 kann beispielsweise ein Pneumatikmotor sein. In diesem Fall werden die Abstützvorrichtungen 628 bevorzugt im mit dem Zugfahrzeug verbundenen Zustand des Ausstellungsfahrzeugs 610 aus- und eingefahren. Es ist jedoch auch möglich, einen Elektromotor als motorischen Antrieb 630 zu verwenden. Dieser kann auch im vom Zugfahrzeug getrennten Zustand des Ausstellungsfahrzeugs 610 betrieben werden, da Ausstellungsstände üblicherweise an das Stromnetz einer Messehalle oder dergleichen angeschlossen werden.

Es wurde vorstehend ein Sattelzug vorgestellt, welcher eine mit einem motorischen Antrieb versehene Abstützvorrichtung am Sattelauflieger aufweist. Gemäß den beschriebenen Ausführungsformen kann ein derartiger Sattelzug dadurch erhalten werden, daß die schon bislang an Sattelzügen vorhandenen handbetätigten Abstützvorrichtungen mit einem leistungsschwachen motorischen Antrieb versehen werden. Neben dem in den Ausführungsbeispielen erwähnten Druckluftmotor kann beispielsweise auch ein Elektromotor verwendet werden. Hierzu ist lediglich die Führung einer zusätzlichen Versorgungsleitung von der Zugmaschine zum Sattelauflieger erforderlich. Durch die Verwendung eines leistungsarmen Motors kann die motorisch angetriebene Abstützvorrichtung preisgünstig zur Verfügung gestellt werden. Neben ihrem Einsatz bei einem Sattelzug kann die motorisch angetriebene Abstützvorrichtung auch bei einer Reihe anderer Fahrzeuge, beispielsweise zur Deichselabstützung von Einachsanhängern, zur Abstützung von Fahrzeugen im Kipperbetrieb und zur Abstützung von Ausstellungsfahrzeugen im Ausstellungsbetrieb, mit Vorteil eingesetzt werden.

## Patentansprüche

1. Sattelzug (10), umfassend ein Zugfahrzeug (12) mit einem Zugfahrzeugrahmen (16), einer Hinterachsbaugruppe (18) und einer Sattelplatte (20) auf dem Zugfahrzeugrahmen (16) im Bereich der Hinterachsbaugruppe (18) des Zugfahrzeugrahmens (16), wobei die Sattelplatte (20) gegenüber der Achshöhe (H) der Hinterachsbaugruppe (18) des Zugfahrzeugrahmens (16) höhenverstellbar ist, der Sattelzug (10) ferner umfassend einen Sattelauflieger (14) mit einer Hinterachsbaugruppe (24) im Bereich des hinteren Teils des Sattelaufliegers (14), einer Aufliegervorrichtung (26) im Bereich des vorderen Teils des Sattelaufliegers (14) zur Auflage auf der Sattelplatte (20) und einer zwischen der Hinterachsbaugruppe (24) des Sattelaufliegers (14) und der Aufliegervorrichtung (26) des Sattelaufliegers (14) angeordneten, im wesentlichen vertikal gerichteten und längenveränderbaren Abstützvorrichtung (28) zur Abstützung des Vorderteils des vom Zugfahrzeug (12) getrennten Sattelaufliegers (14) auf der Fahrfläche (F), wobei die Abstützvorrichtung (28) selbstsperrend ausgebildet und durch einen motorischen Antrieb (30) zwischen einer verkürzten Fahrstellung und einer verlängerten Stützstellung verstellbar ist,
und wobei der motorische Antrieb (30) der Abstützvorrichtung (28) leistungsmäßig auf das Verstellen der Abstützvorrichtung (28) im unbelasteten Zustand beschränkt ist derart, daß beim Absatteln des Sattelaufliegers die Abstützvorrichtung (28) bis zum Aufstehen auf der Fahrfläche (F) verlängerbar ist und die endgültige Übernahme der Stützfunktion erst durch Absenken der Sattelplatte (20) erreicht wird.

2. Sattelzug nach Anspruch 1,
**dadurch gekennzeichnet,**
daß zur Höhenverstellung der Sattelplatte (20) gegenüber der Achshöhe (H) der Hinterachsbaugruppe (18) des Zugfahrzeugrahmens (16) eine Luftfederung (20) dient, welche zwischen der Hinterachsbaugruppe (18) und dem Zugfahrzeugrahmen (16) eingeschaltet ist.

3. Sattelzug nach Anspruch 1 oder 2,
**dadurch gekennzeichnet,**
daß die Abstützvorrichtung (28;128;228;328) von einer handbetätigbaren Abstützvorrichtung, insbesondere einer handelsüblichen Abstützvorrichtung, abgeleitet ist.

4. Sattelzug nach Anspruch 3,
**dadurch gekennzeichnet,**
daß die handbetätigbare Abstützvorrichtung (28;128; 228;328) mit dem motorischen Antrieb (30;130;230;330) ständig gekuppelt oder kuppelbar ist.

5. Sattelzug nach Anspruch 4,
**dadurch gekennzeichnet,**
daß der motorische Antrieb (230) mit der Abstützvorrichtung (228) durch ein Zusatzgetriebe (256), insbesondere Planetengetriebe, gekuppelt oder kuppelbar ist.

6. Sattelzug nach Anspruch 3,
**dadurch gekennzeichnet,**
daß die Abstützvorrichtung mit einem Kurbeltrieb (50/52;150/152;250/252) ausgeführt ist.

7. Sattelzug nach Anspruch 6,
**dadurch gekennzeichnet,**
daß der Kurbeltrieb (50/52;150/152;250/252;350) mit einem Schaltgetriebe (50;150;250;350) ausgeführt ist, welches ein kleines Übersetzungsverhältnis für die Verstellung der Abstützvorrichtung unter Last und ein großes Übersetzungsverhältnis für die Verstellung der Abstützvorrichtung ohne Last anbietet.

8. Sattelzug nach Anspruch 6 oder 7,
**dadurch gekennzeichnet,**
daß der motorische Antrieb (30;130;230) an eine Welle (50b;15Ob;25Ob) des Kurbeltriebs (50/52;150/152; 250/252) angekuppelt oder ankuppelbar ist.

9. Sattelzug nach Anspruch 7 oder 8,
**dadurch gekennzeichnet,**
daß der motorische Antrieb (30;130;230;330) derart mit dem Schaltgetriebe (50;150;250;350) verbunden ist, daß er unter Ausnutzung des kleinen Übersetzungsverhältnisses die Verstellung der Abstützvorrichtung (28;128;228; 328) bewirkt.

10. Sattelzug nach einem der Ansprüche 7 bis 9,
**dadurch gekennzeichnet,**
daß der motorische Antrieb (330) die Kurbel ersetzt.

11. Sattelzug nach einem der Ansprüche 7 bis 9,
**dadurch gekennzeichnet,**
daß unter Beibehaltung der Kurbel (52) der motorische Antrieb (30) mit einem Zusatzeingang (50b3) des Kurbeltriebs (50/52) verbunden ist.

12. Sattelzug nach einem der Ansprüche 1 - 11,
**dadurch gekennzeichnet,**
daß die Abstützvorrichtung (28;128;228; 328) zwei quer zur Fahrtrichtung nebeneinander liegende Stützelemente (44;144;244;344) aufweist, welche gemeinsam antreibbar sind.

13. Sattelzug nach Anspruch 12,
**dadurch gekennzeichnet,**
daß der motorische Antrieb (30) innerhalb eines Tragrahmens (46) des Sattelaufliegers (14) zwischen den beiden Stützelementen (44) angeordnet ist.

14. Sattelzug nach einem der Ansprüche 1 - 13,
**dadurch gekennzeichnet**,
daß die Abstützvorrichtung (28;128;228; 328) mindestens ein mit einem Spindeltrieb ausgeführtes Stützelement (44;144;244;344) umfaßt.

15. Sattelzug nach einem der Ansprüche 1 - 14,
**dadurch gekennzeichnet,**
daß der motorische Antrieb einen Elektromotor umfaßt.

16. Sattelzug nach einem der Ansprüche 1 - 14,
**dadurch gekennzeichnet,**
daß der motorische Antrieb (30;130;230; 330) einen Druckluftmotor umfaßt, welcher von einem aufliegerseitigen Druckluftbehälter (32) her antreibbar ist.

17. Sattelauflieger mit einer motorisch angetriebenen Abstützvorrichtung nach einem der Ansprüche 1 - 16.

18. Abstützvorrichtung an Fahrzeugen, insbesondere zur Abstützung von Sattelaufliegern bei Trennung derselben von einem Zugfahrzeug, zur Deichselabstützung von Einachsanhängern, zur Abstützung von Fahrzeugen im Kipperbetrieb und zur Abstützung von Ausstellungsfahrzeugen im Ausstellungsbetrieb, wobei die Abstützvorrichtung im wesentlichen vertikal gerichtet und längenveränderbar ist, selbstsperrend ausgebildet ist und durch einen motorischen Antrieb (30;130;230;330) zwischen einer verkürzten Fahrstellung und einer verlängerten Stützstellung verstellbar ist und wobei der motorische Antrieb (30;130;230;330) der Abstützvorrichtung leistungsmäßig auf das Verstellen der Abstützvorrichtung im unbelasteten Zustand beschränkt ist derart, daß die Abstützvorrichtung nur bis zum Aufstehen auf der Fahrfläche (F) verlängerbar ist.

19. Abstützvorrichtung nach Anspruch 18,
**dadurch gekennzeichnet,**
daß sie von einer handbetätigbaren Abstützvorrichtung, insbesondere einer handelsüblichen Abstützvorrichtung, abgeleitet ist.

20. Abstützvorrichtung nach Anspruch 19,
**dadurch gekennzeichnet,**
daß die handbetätigbare Abstützvorrichtung mit dem motorischen Antrieb (30;130;230;330) ständig gekuppelt oder kuppelbar ist.

21. Abstützvorrichtung nach Anspruch 20,
**dadurch gekennzeichnet**,
daß der motorische Antrieb (230) mit der Abstützvorrichtung (228) durch ein Zusatzgetriebe (256), insbesondere Planetengetriebe, gekuppelt oder kuppelbar ist.

22. Abstützvorrichtung nach Anspruch 19,
**dadurch gekennzeichnet,**
daß sie mit einem Kurbeltrieb (50/52;150/152;250/252) ausgeführt ist.

23. Abstützvorrichtung nach Anspruch 22,
**dadurch gekennzeichnet,**
daß der motorische Antrieb (30;130;230) an eine Welle (50b;150b;250b) des Kurbeltriebs (50/52;150/152; 250/252) angekuppelt oder ankuppelbar ist.

24. Abstützvorrichtung nach Anspruch 22 oder 23,
**dadurch gekennzeichnet,**
daß der Kurbeltrieb (50/52;150/152;250/252;350) mit einem Schaltgetriebe (50;150;250;/252) ausgeführt ist, welches ein kleines Übersetzungsverhältnis für die Verstellung der Abstützvorrichtung unter Last und ein großes Übersetzungsverhältnis für die Verstellung der Abstützvorrichtung ohne Last anbietet

25. Abstützvorrichtung nach Anspruch 24,
**dadurch gekennzeichnet,**
daß der motorische Antrieb (30;130;230;330) derart mit dem Schaltgetriebe (50;150;250;350) verbunden ist, daß er die Verstellung der Abstützvorrichtung (28;128;228; 328) unter Ausnutzung des kleinen Übersetzungsverhältnisses bewirkt.

26. Abstützvorrichtung nach Anspruch 24 oder 25,
**dadurch gekennzeichnet,**
daß der motorische Antrieb (330) die Kurbel ersetzt.

27. Abstützvorrichtung nach Anspruch 24 oder 25,
**dadurch gekennzeichnet,**
daß unter Beibehaltung der Kurbel (52) der motorische Antrieb (30) mit einem Zusatzeingang (50b3) des Kurbeltriebs (50/52) verbunden ist.

28. Abstützvorrichtung nach einem der Ansprüche 18 - 27,
**dadurch gekennzeichnet,**
daß sie mindestens ein Paar quer zur Fahrtrichtung nebeneinander liegender Stützelemente (44;144;244; 344) aufweist, welche gemeinsam antreibbar sind.

29. Abstützvorrichtung nach einem der Ansprüche 18 - 28,
**dadurch gekennzeichnet,**
daß sie mindestens ein mit einem Spindeltrieb ausgeführtes Stützelement (44;144;244;344) umfaßt.

30. Abstützvorrichtung nach einem der Ansprüche 18 - 29,
**dadurch gekennzeichnet,**
daß der motorische Antrieb einen Elektromotor umfaßt.

31. Abstützvorrichtung nach einem der Ansprüche 18 - 29,
**dadurch gekennzeichnet,**
daß der motorische Antrieb (30;130;230;330) einen Druckluftmotor umfaßt, welcher von einem aufliegerseitigen Druckluftbehälter (32) her antreibbar ist.

## Claims

1. An articulated train (10) comprising a tractor vehicle (12) having a tractor vehicle chassis (16), a rear axle assembly (18) and a saddle plate (20) on the tractor vehicle chassis (16) in the region of the rear axle assembly (18) of the tractor vehicle chassis (16), said saddle plate (20) being vertically displaceable in relation to the axle height (H) of the rear axle assembly (18) of the tractor vehicle chassis (16), said articulated train (10) further comprising a semi-trailer (14) with a rear axle assembly (24) in the region of the rear part of the semi-trailer (14), a support device (26) in the region of the front part of the semi-trailer (14) adapted to rest on the saddle plate (20) and, disposed between the rear axle assembly (24) of the semi-trailer (14) and the support device (26) of the semi-trailer (14), a substantially vertically oriented and length-variable staying device (28) for supporting on the ground (F) the front part of the semi-trailer (14) when this latter is separated from the tractor vehicle (12), the staying device (28) being self-locking and being displaceable by a motorized drive (30) between a shortened travel position and an extended support position, the output of the motorized drive (30) of the staying device (28) being limited to displacement of the staying device (28) in the unloaded state such that upon unsaddling the semi-trailer the staying device (28) is extendable until a contact with the ground (F) is reached and the final take-over of the supporting function is only achieved by lowering the saddle plate (20).

2. An articulated train according to claim 1, characterized in that for adjusting the height of the saddle plate (20) in relation to the axle height (H) of the rear axle assembly (18) of the tractor vehicle chassis (16), an air suspension arrangement (20) is provided, said air suspension arrangement (20) being incorporated between the rear axle assembly (18) and the tractor vehicle chassis (16).

3. An articulated train according to claim 1 or 2, characterized in that the staying device (28; 128; 228; 328) is derived from a manually operable staying device, particularly a commercially available staying device.

4. An articulated train according to claim 3, characterized in that the manually operable staying device (28; 128; 228; 328) is or can be constantly coupled to the motorized drive (30; 130; 230; 330).

5. An articulated train according to claim 4, characterized in that the motorized drive (230) is or can be coupled to the staying device (228) by an additional gear mechanism (256), particularly a planetary gear mechanism.

6. An articulated train according to claim 3, characterized in that the staying device is constructed with a crank transmission (50/52; 150/152; 250/252).

7. An articulated train according to claim 6, characterized in that the crank transmission (50/52; 150/152; 250/252; 350) is constructed with a gear shift mechanism (50; 150; 250; 350) offering a low transmission ratio for the displacement of the staying device under load and a high transmission ratio for displacement of the staying device when unloaded.

8. An articulated train according to claims 6 or 7, characterized in that the motorized drive (30; 130; 230) is or can be coupled to a shaft (50b; 150b; 250b) of said crank transmission (50/52; 150/152; 250/252).

9. An articulated train according to claim 7 or 8, characterized in that the motorized drive (30; 130; 230; 330) is connected to the gear shift mechanism (50; 150; 250; 350) such that it effects displacement of the staying device (28; 128; 228; 328) utilizing the low transmission ratio.

10. An articulated train according to one of claims 7 to 9, characterized in that the motorized drive (330) replaces the crank.

11. An articulated train according to one of claims 7 to 9, characterized in that while retaining the crank (52) the motorized drive (30) is connected to an additional input (50b3) of the crank transmission (50/52).

12. An articulated train according to one of claims 1 to 11, characterized in that the staying device (28; 128; 228; 328) comprises two stay elements (44; 144; 244; 344) disposed transversely to a direction of travel side by side with respect to each other, said stay elements being jointly driveable.

13. An articulated train according to claim 12, characterized in that the motorized drive (30) is disposed within a supporting frame (46) of the semi-trailer (14) between the two stay elements (44).

14. An articulated train according to one of claims 1 bis 13, characterized in that the staying device (28; 128; 228; 328) comprises at least one stay element (44; 144; 244; 344) which is constructed with a worm drive.

15. An articulated train according to one of claims 1 to 14, characterized in that the motorized drive comprises an electric motor.

16. An articulated train according to one of claims 1 to 14, characterized in that said motorized drive (30; 130; 230; 330) comprises a compressed air motor which can be driven by a compressed air reservoir (32) at the semi-trailer end.

17. Semi-trailer comprising a motor driven staying device according to one of claims 1 to 16.

18. A staying device on vehicles, particularly for supporting semi-trailers upon separation thereof from a tractor vehicle, for supporting the drawbar of single axle trailers, for supporting of vehicles when engaged in tipping work and for supporting exhibition vehicles when engaged in exhibition work, the staying device being substantially vertically oriented and being length-variable, the staying device being self-locking and being displaceable between a shortened travel position and an extended supporting position by a motorized drive (30; 130; 230; 330), the output of the motorized drive (30; 130; 230; 330) of the staying device being limited to displacement of the staying device in the unloaded state such that the staying device is only extendable until a contact with the ground (F) has been achieved.

19. A staying device according to claim 18, characterized in that it is derived from a manually operable staying device, particularly a commercially available staying device.

20. Staying device according to claim 19, characterized in that the manually operable staying device is or can be constantly coupled to the motorized drive (30; 130; 230; 330).

21. Staying device according to claim 20, characterized in that the motorized drive (230) is or can be coupled to the staying device (228) by an additional gear mechanism (256), in particular a planetary gear mechanism.

22. Staying device according to claim 19, characterized in that it is constructed with a crank transmission (50/52; 150/152; 250/252).

23. Staying device according to claim 22, characterized in that the motorized drive (30; 130; 230) is or can be coupled to a shaft (50b; 150b; 250b) of the crank transmission (50/52; 150/152; 250/252).

24. Staying device according to claim 22 or 23, characterized in that the crank transmission (50/52; 150/152; 250/252; 350) is constructed with a gear shift mechanism (50; 150; 250; 350) which offers a low transmission ratio for displacement of the staying device under load and a high transmission ratio for displacement of the staying device unloaded.

25. Staying device according to claim 24, characterized in that the motorized drive (30; 130; 230; 330) is connected to the gear shift mechanism (50; 150; 250; 350) such that it effects displacement of the staying device (28; 128; 228; 328) while utilizing the low transmission ratio.

26. Staying device according to claim 24 or 25, characterized in that the motorized drive (330) replaces the crank.

27. Staying device according to claim 24 or 25, characterized in that while retaining the crank (52) the motorized drive (30) is connected to an additional input (50b3) of the crank transmission (50/52).

28. Staying device according to one of claims 18 to 27, characterized in that it comprises at least one pair of stay elements (44; 144; 244; 344) arranged laterally with respect to the direction of travel side by side to each other, said stay elements being jointly driveable.

29. Staying device according to of claims 18 to 28, characterized in that it comprises at least one stay element (44; 144; 244; 344) which is constructed with a worm drive.

30. Staying device according to one of claims 18 to 29, characterized in that the motorized drive comprises an electric motor.

31. Staying device according to one of claims 18 to 29, characterized in that the motorized drive (30; 130; 230; 330) comprises a compressed air motor which is driveable by a compressed air reservoir (32) at the semi-trailer end.

## Revendications

1. Ensemble semi-remorque (10), comprenant un véhicule tracteur (12) comportant un chassis de véhicule tracteur (16), un groupe d'essieux arrière (18) et un plateau de sellette (20) monté sur le châssis de véhicule tracteur (16), dans la zone du groupe d'essieux arrière (18) du châssis de véhicule tracteur (16), le plateau de sellette (20) étant réglable en hauteur par rapport à la hauteur d'essieu (H) du groupe d'essieux arrière (18) du châssis de véhicule tracteur (16), l'ensemble semi-remorque (10) comprenant en outre une semi-remorque (14) comportant un groupe d'essieux arrière (24) dans la zone de la partie arrière de la semi-remorque (14), un dispositif d'attelage (26) dans la zone de la partie avant de la semi-remorque (14), pour assurer la pose sur le plateau de sellette (20) et un dispositif d'appui (28) orienté sensiblement verticalement et à longueur modifiable, disposé entre le groupe d'essieux arrière (24) de la semi-remorque (14) et le dispositif d'attelage (26) de la semi-remorque (14), en vue de soutenir la partie avant de la semi-remorque (14) une fois qu'elle est séparée du véhicule tracteur (12), en la posant sur la surface de roulage (F), le dispositif d'appui (28) étant auto-bloquant et pouvant être réglé, au moyen d'un entraînement motorisé (30), entre une position de roulage raccourcie et une position d'appui allongée, et où l'entraînement motorisé (30) du dispositif d'appui (28) est limité en puissance, à la possibilité d'effectuer un déplacement de réglage du dispositif d'appui (28), lorsque l'on se trouve dans l'état non chargé, de manière que, lors du désaccouplement de la semi-remorque, le dispositif d'appui (28) puisse être allongé jusqu'à la pose sur la surface de roulage (F) et que la prise en charge finale de la fonction d'appui soit atteinte ensuite par abaissement du plateau de sellette (20).

2. Ensemble semi-remorque selon la revendication 1, caractérisé en ce qu'une suspension pneumatique (20), connectée entre le groupe d'essieux arrière (18) et le chassis de véhicule tracteur (16), est utilisée pour assurer le réglage en hauteur du plateau de sellette (20) par rapport à la hauteur d'essieu (H) du groupe d'essieux arrière (18) du châssis de véhicule tracteur (16).

3. Ensemble semi-remorque selon la revendication 1 ou 2, caractérisé en ce que le dispositif d'appui (28; 128; 228; 328) est dérivé d'un dispositif d'appui actionnable manuellement, en particulier un dispositif d'appui du commerce.

4. Ensemble semi-remorque selon la revendication 3, caractérisé en ce que le dispositif d'appui (28; 128; 228; 328) actionnable manuellement est couplé ou susceptible d'être couplé en permanence à l'entraînement motorisé (30; 130; 230; 330).

5. Ensemble semi-remorque selon la revendication 4, caractérisé en ce que l'entraînement motorisé (230) est couplé ou susceptible d'être couplé au dispositif d'appui (228) au moyen d'une transmission à engrenages additionnelle (256), en particulier une transmission à engrenages planétaire.

6. Ensemble semi-remorque selon la revendication 3, caractérisé en ce que le dispositif d'appui est réalisé avec un mécanisme à manivelle (50/52; 150/152; 250/252).

7. Ensemble semi-remorque selon la revendication 6, caractérisé en ce que le mécanisme à manivelle (50/52; 150/152; 250/252; 350) est réalisé avec une boîte de vitesses (50; 150; 250; 350), qui offre un petit rapport de transmission pour le réglage des dispositifs d'appui sous charge et un grand rapport de transmission pour le réglage du dispositif d'appui sans charge.

8. Ensemble semi-remorque selon la revendication 6 ou 7, caractérisé en ce que l'entraînement motorisé (30; 130; 230) est couplé ou susceptible d'être couplé à un arbre (50b; 150b; 250b) du mécanisme à manivelle (50/52; 150/152; 250/252).

9. Ensemble semi-remorque selon la revendication 7 ou 8, caractérisé en ce que l'entraînement motorisé (30; 130; 230; 330) est relié à la boîte de vitesses (50; 150; 250; 350), de manière à provoquer le déplacement de réglage du dispositif d'appui (28; 128; 228; 328) en utilisant le petit rapport de transmission.

10. Ensemble semi-remorque selon l'une des revendications 7 à 9, caractérisé en ce que l'entraînement motorisé (330) remplace la manivelle.

11. Ensemble semi-remorque selon l'une des revendications 7 à 9, caractérisé en ce que, en conservant la manivelle (52), l'entraînement motorisé (30) est relié à une entrée additionnelle (50b3) du mécanisme à manivelle (50/52).

12. Ensemble semi-remorque selon l'une des revendications 1 à 11, caractérisé en ce que le dispositif d'appui (28; 128; 228; 328) présente deux éléments d'appui (44; 144; 244; 344), situés l'un à côté l'autre dans la direction transversale du véhicule et pouvant être entraînés conjointement.

13. Ensemble semi-remorque selon la revendication 12, caractérisé en ce que l'entraînement motorisé (30) est disposé dans un châssis support (46) de la semi-remorque (14), entre les deux éléments d'appui (44).

14. Ensemble semi-remorque selon l'une des revendications 1 à 13, caractérisé en ce que le dispositif d'appui (28; 128; 228; 328) comprend au moins un élément d'appui (44; 144; 244; 344) réalisé avec une transmission à broche filetée.

15. Ensemble semi-remorque selon l'une des revendications 1 à 14, caractérisé en ce que l'entraînement motorisé comprend un moteur électrique.

16. Ensemble semi-remorque selon l'une des revendications 1 à 14, caractérisé en ce que l'entraînement motorisé (30; 130; 230; 330) comprend un moteur à air comprimé qui peut être entraîné depuis un récipient d'air comprimé (32) situé côté semi-remorque.

17. Semi-remorque avec un dispositif d'appui à entraînement motorisé, selon l'une des revendications 1 à 16.

18. Dispositif d'appui pour des véhicules, en particulier pour assurer l'appui de semi-remorques lors de la séparation de celles-ci vis-à-vis d'un véhicule tracteur, pour assurer l'appui du timon appartenant à des remorques à un essieu, pour assurer l'appui de véhicules en position basculée et pour assurer l'appui de véhicules d'exposition en position d'exposition, le dispositif d'appui étant orienté sensiblement verticalement et modifiable en longueur, étant auto-bloquant et étant réglable au moyen d'un entraînement motorisé (30; 130; 230; 330) entre une positon de roulage raccourcie et une position d'appui allongée et l'entraînement (30; 130; 230; 330) du dispositif d'appui étant limité en puissance, de façon à ne permettre que le déplacement de réglage du dispositif d'appui lorsque l'on se trouve dans l'état non chargé, de manière que le dispositif d'appui ne soit susceptible d'être allongé que jusqu'à la pose sur la surface de roulage (F).

19. Dispositif d'appui selon la revendication 18, caractérisé en ce qu'il est dérivé d'un dispositif d'appui actionnable manuellement, en particulier d'un dispositif d'appui du commerce.

20. Dispositif d'appui selon la revendication 19, caractérisé en ce que le dispositif d'appui actionnable manuellement est couplé ou susceptible d'être couplé en permanence à l'entraînement motorisé (30; 130; 230; 330).

21. Dispositif d'appui selon la revendication 20, caractérisé en ce que l'entraînement motorisé (230) est couplé ou susceptible d'être couplé au dispositif d'appui (228) au moyen d'une transmission à engrenages additionnelle (256), en particulier une transmission à engrenages planétaire.

22. Dispositif d'appui selon la revendication 19, caractérisé en ce qu'il est réalisé avec un mécanisme à manivelle (50/52; 150/152; 250/252).

23. Dispositif d'appui selon la revendication 22, caractérisé en ce que l'entraînement motorisé (30 ; 130; 230) est couplé ou susceptible d'être couplé à un arbre (50b; 150b; 250b) du mécanisme à manivelle (50/52; 150/152; 250/252).

24. Dispositif d'appui selon la revendication 22 ou 23, caractérisé en ce que le mécanisme à manivelle (50/52; 150/152; 250/252; 350) est réalisé avec une boîte de vitesses (50; 150; 250; 252), qui offre un petit rapport de transmission pour le réglage des dispositifs d'appui sous charge et un grand rapport de transmission pour le réglage du dispositif d'appui sans charge.

25. Dispositif d'appui selon la revendication 24, caractérisé en ce que l'entraînement motorisé (30; 130; 230; 330) est relié à la boîte de vitesses (50; 150; 250; 350), de manière à provoquer le déplacement de réglage du dispositif d'appui (28; 128; 228; 328) en utilisant le petit rapport de transmission.

26. Dispositif d'appui selon la revendication 24 ou 25, caractérisé en ce que l'entraînement motorisé (330) remplace la manivelle.

27. Dispositif d'appui selon la revendication 24 ou 25, caractérisé en ce que, en conservant la manivelle (52), l'entraînement motorisé (30) est relié à une entrée additionnelle (50b3) du mécanisme à manivelle (50/52).

28. Dispositif d'appui selon l'une des revendications 18 à 27, caractérisé en ce qu'il présente au moins une paire d'éléments d'appui (44; 144; 244; 344) disposés l'un à côté l'autre, transversalement par rapport à la direction de roulage, et susceptibles d'être entraînés conjointement.

29. Dispositif d'appui selon l'une des revendications 18 à 28, caractérisé en ce qu'il comprend au moins un élément d'appui (44; 144; 244; 344) réalisé avec une transmission à broche filetée.

30. Dispositif d'appui selon l'une des revendications 18 à 29, caractérisé en ce que l'entraînement motorisé comprend un moteur électrique.

31. Dispositif d'appui selon l'une des revendications 18 à 29, caractérisé en ce que l'entraînement motorisé (30; 130; 230; 330) comprend un moteur à air comprimé qui peut être entraîné depuis un récipient d'air comprimé (32) situé côté semi-remorque.
